# EUROPÄISCHE PATENTSCHRIFT

(11) **EP 3 626 509 B1**
(45) Veröffentlichungstag und Bekanntmachung des Hinweises auf die Patenterteilung: **23.08.2023**
(21) Anmeldenummer: 19198010.1
(22) Anmeldetag: 18.09.2019
(51) Int. Cl.: B60L 9/22, B60L 9/28, B60L 9/30, B60L 15/00, B60L 15/32, B60L 50/53, B61C 3/00, B61D 1/06, B61D 3/10

(54) **SCHIENENFAHRZEUG**
RAIL VEHICLE
VÉHICULE SUR RAIL

(30) Priorität: 18.09.2018 DE 102018215806
(43) Veröffentlichungstag der Anmeldung: 25.03.2020
(73) Patentinhaber: Siemens Mobility GmbH, 81739 München (DE)
(72) Erfinder: FETTER, Wolfgang, 91052 Erlangen (DE); GLINKA, Martin Dr., 91080 Uttenreuth (DE)
(74) Vertreter: Siemens Patent Attorneys

(56) Entgegenhaltungen:
- EP-A1- 2 835 279
- DE-A1- 10 248 438
- DE-A1-102013 207 952
- DE-A1-102015 206 561

## Beschreibung

Die Erfindung betrifft ein Schienenfahrzeug, welches eine hohe Flexibilität bezüglich einer Fahrzeugkonfiguration, insbesondere einer Anzahl Wagen, und einer Traktionsleistung bietet. Vorteilhaft wird durch die Erfindung eine einfache Skalierbarkeit der Traktionsleistung unter Verwendung einer begrenzten Anzahl Traktionskomponenten erzielt.

Aus dem Dokument DE 102 48 438 A1 ist eine Energieversorgungseinrichtung für Schienenfahrzeuge bekannt, bei welcher insbesondere ein als Endwagen ausgebildeter Motorwagen einen Maschinenraum aufweist, in dem ein Transformator angeordnet und mit einer Einspeiseeinrichtung in Form eines Vierquadrantenstellers verbunden ist. Der Vierquadrantensteller wandelt den Wechselstrom des Transformators in einen Gleichstrom und speist diesen in einen Zwischenkreis in Form einer Zugsammelschiene ein. Über die Zugsammelschiene werden Traktionseinrichtungen in Form eines jeweiligen Pulswechselrichters in dem Endwagen, einem als Steuerwagen ausgebildeten weiteren Endwagen sowie einem Mittelwagen versorgt, wobei die Pulswechselrichter jeweils den Gleichstrom aus der Zugsammelschiene in Betriebsströme für Motoren von Triebdrehgestellen der Wagen umwandeln.

Es wird ein Schienenfahrzeug vorgeschlagen, welches zumindest einen ersten und einen zweiten Endwagen sowie ein elektrisches Traktionssystem aufweist. Erfindungsgemäß weist das Schienenfahrzeug zumindest einen Netzstromrichter, welcher über einen Stromabnehmer mit einer eine Gleich- und/oder Wechselspannung führenden Oberleitung verbindbar ist, einen ersten Traktionsstromrichter, welcher zumindest zwei Traktionsmotoren eines an dem ersten Endwagen angeordneten ersten Triebdrehgestells speist, wobei der Netzstromrichter und der erste Traktionsstromrichter an dem ersten Endwagen und in einem gemeinsamen ersten Gehäuse angeordnet sind, einen zweiten Traktionsstromrichter, welcher zumindest zwei Traktionsmotoren eines an dem zweiten Endwagen angeordneten zweiten Triebdrehgestells speist, wobei der zweite Traktionsstromrichter an dem zweiten Endwagen und in einem zweiten Gehäuse angeordnet ist, und einen ersten und einen zweiten Gleichspannungs-Zwischenkreis auf, wobei der Netzstromrichter den ersten Traktionsstromrichter über den ersten Gleichspannungs-Zwischenkreis und den zweiten Traktionsstromrichter über den zweiten Gleichspannungs-Zwischenkreis speist.

Der Netzstromrichter dient einer Umformung eines Wechselstroms und/oder eines Gleichstroms in eine geregelte Gleichspannung des jeweiligen Gleichspannungs-Zwischenkreises. Insbesondere verwirklicht der Netzstromrichter dabei die Funktion eines Vierquadrantensteller und/oder, insbesondere abhängig von der Gleichspannung der Oberleitung und der jeweiligen Gleichspannung der Zwischenkreise, eines Gleichstromstellers. Die Traktionsstromrichter dienen jeweils einer Umformung der Gleichspannung des Zwischenkreises in einen Drehstrom mit einer Spannung variabler Höhe und Frequenz und sind insbesondere jeweils als ein Pulswechselrichter ausgestaltet. Die Traktionsmotoren der Triebdrehgestelle sind vorzugsweise als Asynchron- oder Synchron-Motoren ausgestaltet.

Für den Fall, dass der Netzstromrichter sowohl über einen Gleichstromsteller mit einer eine Gleichspannung führenden Oberleitung als auch über einen Transformator mit einer eine Wechselspannung führenden Oberleitung verbindbar ist, ist vorzugsweise für jede Spannungsart ein gesonderter Stromabnehmer vorgesehen, welche insbesondere auf dem Dach eines der Endwagen angeordnet sind.

Erfindungsgemäß weist der Netzstromrichter vier Teil-Netzstromrichter auf, wobei jeweils zwei Teil-Netzstromrichter einen Gleichspannungs-Zwischenkreis speisen.

Dabei kann für jeden Gleichspannungs-Zwischenkreis beispielsweise ein Saugkreis vorgesehen sein.

Gemäß einer weiteren Ausgestaltung weist das Schienenfahrzeug ferner einen Transformator auf, welcher eingangsseitig über den Stromabnehmer mit einer eine Wechselspannung führenden Oberleitung verbindbar ist und ausgangsseitig den Netzstromrichter speist. Erfindungsgemäß ist der Transformator an dem ersten Endwagen und in einem dritten Gehäuse angeordnet.

Basierend auf der vorstehenden Ausgestaltung kann das Schienenfahrzeug gemäß einer weiteren Ausgestaltung eine flüssigkeitsbasierte Kühlanlage zur gemeinsamen Kühlung des Transformators und des Netzstromrichters aufweisen, wobei die Kühlanlage ebenfalls an dem ersten Endwagen und in einem vierten Gehäuse angeordnet ist.

Erfindungsgemäß sind das erste und das zweite Triebdrehgestell an einem von dem jeweils anderen Endwagen abgewandten Ende des ersten bzw. zweiten Endwagens angeordnet. Anders ausgedrückt sind das erste und das zweite Triebdrehgestell im Bereich des vorderen respektive im Bereich des hinteren Endes des Schienenfahrzeugs angeordnet.

Erfindungsgemäß weist das Schienenfahrzeug ferner zumindest zwei zwischen dem ersten und dem zweiten Endwagen angeordnete Mittelwagen auf, wobei sich die Mittelwagen auf Trieb- und/oder Laufdrehgestellen abstützen, und wobei sich zwei der Mittelwagen auf einem jeweiligen weiteren Triebdrehgestell abstützen. Diese Drehgestelle sind insbesondere als bekannte Jakobs-Drehgestelle ausgestaltet, wobei jeweils zwei benachbarte Wagen, sei es zwei Mittelwagen oder ein Mittelwagen und ein Endwagen, auf einem gemeinsamen Drehgestell abstützen. Dabei kann sich ein solcher Mittelwagen auf einem Trieb- und einem Laufdrehgestell, auf zwei Triebdrehgestellen oder auf zwei Laufdrehgestellen abstützen.

Erfindungsgemäße sind zwei weitere Traktionsstromrichter, welche jeweils zumindest zwei Traktionsmotoren der weiteren Triebdrehgestelle speisen und an dem jeweiligen Mittelwagen oder an einem benachbarten weiteren Mittelwagen und in einem jeweiligen fünften Gehäuse angeordnet. Ferner ist erfindungsgemäß an jedem Endwagen und Mittelwagen höchstens ein Traktionsstromrichter anordenbar. Vorteilhaft wird durch den letztgenannten Punkt eine gleichmäßigere Verteilung der zusätzlichen Gewichtslast aufgrund eines oder mehrerer weiterer Traktionsstromrichter auf die Wagen des Schienenfahrzeugs erreicht. Insbesondere bei einem Einsatz von Jakobs-Drehgestellen muss darauf geachtet werden, eine jeweils zulässige Achslast nicht zu überschreiten.

Gemäß einer nicht erfindungsgemäßen Ausgestaltung speist der Netzstromrichter den weiteren Traktionsstromrichter über den ersten, den zweiten oder über beide Gleichspannungs-Zwischenkreise, wobei mittels Schaltern eine elektrische Verbindung des weiteren Traktionsstromrichters wahlweise mit dem ersten, mit dem zweiten, mit beiden oder mit keinem der Gleichspannungs-Zwischenkreise herstellbar ist. Dabei sind die Schalter in dem ersten Gehäuse angeordnet.

Beispielsweise kann nach dieser nicht erfindungsgemäßen Ausgestaltung der weitere Traktionsstromrichter in der Grundkonfiguration mit beiden Gleichspannungs-Zwischenkreisen verbunden sein, sodass auch diese miteinander verbunden sind. Bei Auftreten einer Störung in einem der Zwischenkreise kann durch geeignetes Schalten der Schalter der weitere Traktionsstromrichter ausschließlich mit dem noch aktiven Zwischenkreis verbunden werden, wodurch vorteilhaft weiterhin mehr als fünfzig Prozent der Traktionsleistung verfügbar sind. Sollte beispielsweise der weitere Traktionsstromrichter eine Störung aufweisen, so kann dieser wiederum durch geeignetes Schalten der Schalter von beiden Zwischenkreisen getrennt werden, sodass der erste und der zweite Traktionsstromrichter weiterhin für die Generierung von Traktionsleistung zur Verfügung stehen.

Erfindungsgemäß speist der Netzstromrichter die weiteren Traktionsstromrichter jeweils über einen der beiden Gleichspannungs-Zwischenkreise, wobei die Gleichspannungs-Zwischenkreise elektrisch voneinander getrennt sind. Bei einer Störung in einem der beiden Zwischenkreise ist damit vorteilhaft fünfzig Prozent der Traktionsleistung über den anderen Zwischenkreis und den von diesem gespeisten Traktionsstromrichtern weiterhin verfügbar. Dies gilt natürlich entsprechend für die Grundkonfiguration, gemäß welcher jeder Zwischenkreis einen einzigen Traktionsstromrichter speist.

Gemäß einer weiteren Ausgestaltung weist das Schienenfahrzeug ferner zumindest zwei Hilfsbetriebestromrichter auf, welche jeweils mit einem der Gleichspannungs-Zwischenkreise verbunden sind. Diese zumindest zwei Hilfsbetriebestromrichter können dabei beispielsweise an einem der Endwagen, insbesondere an dem zweiten Endwagen, angeordnet sein.

Gemäß einer weiteren Ausgestaltung weist das Schienenfahrzeug ferner zumindest eine Traktionsbatterie auf, welche über einen Gleichstromsteller mit einem der Gleichspannungs-Zwischenkreise verbunden ist. Mittels einer oder mehrerer derartiger Traktionsbatterien können die Traktionsstromrichter vorteilhaft auch in Bereichen des Schienennetzes mit elektrischer Energie versorgt werden, in denen keine Versorgung durch eine Oberleitung verfügbar ist. Abhängig von der Spannung des Zwischenkreises und der Spannung der Batterie ist der Gleichstromsteller als ein Hoch- oder Tiefsetzsteller ausgestaltet.

Die zumindest eine Traktionsbatterie ist in einem sechsten Gehäuse an einem Endwagen angeordnet. Bei mehreren Traktionsbatterien werden diese vorzugsweise an einem jeweiligen Endwagen des Schienenfahrzeugs angeordnet, insbesondere in speziellen Gehäusen auf dem Dach oder im Unterflurbereich eines Endwagens. Sofern das Schienenfahrzeug über einen oder mehrere Mittelwagen verfügt, können weitere Traktionsbatterien auch entsprechend auf dem Dach oder im Unterflurbereich solcher Mittelwagen angeordnet sein.

Vorzugsweise sind alle Traktionskomponenten, insbesondere der Netzstromrichter, die Traktionsstromrichter, der Transformator sowie, sofern vorhanden, die zumindest eine Traktionsbatterie bzw. deren jeweiliges Gehäuse jeweils im Unterflurbereich oder auf dem Dach eines Wagens angeordnet. Vorteilhaft kann hierdurch der den Fahrgästen des Schienenfahrzeugs zur Verfügung stehende Raum in den Wagen maximiert werden.

Das erfindungsgemäße Schienenfahrzeug kann vorteilhaft als ein Triebzug mit zumindest zwei Endwagen sowie bis zu fünf Mittelwagen ausgestaltet sein, welcher abhängig von der Traktionsleistung Höchstgeschwindigkeiten im Bereich zwischen 140km/h und 200km/h abdecken kann. Die Skalierbarkeit der Traktionsleistung beruht dabei im Wesentlichen auf zumindest zwei Triebdrehgestellen mit jeweils zwei angetriebenen Achsen in den beiden Endwagen, welche um ein oder zwei weitere Triebdrehgestelle ergänzt werden können. Die beiden Triebdrehgestelle der Endwagen sind dabei beispielsweise als Enddrehgestelle ausgestaltet, während die ein oder zwei weiteren Triebdrehgestelle, sofern sie als Jakobs-Drehgestelle ausgeführt sind, jeweils im Bereich des Übergangs zwischen zwei benachbarten Mittelwagen oder im Bereich des Übergangs zwischen einem Endwagen und einem benachbarten Mittelwagen angeordnet werden. Die die Triebdrehgestelle speisenden Traktionsstromrichter, welche vorzugsweise jeweils örtlich nahe des jeweiligen Triebdrehgestells angeordnet sind, werden von einem jeweiligen Gleichspannungs-Zwischenkreis gespeist, welcher bzw. dessen elektrische Leitungen ausgehend von dem Netzstromrichter in einem der Endwagen zu dem anderen Endwagen geführt wird, an dem der zweite Traktionsstromrichter angeordnet ist.

Im Folgenden wird die Erfindung anhand von Ausführungsbeispielen näher erläutert. Dabei zeigen:
- FIG 1: einen zweiteiligen Triebzug,
- FIG 2: einen vierteiligen Triebzug mit drei Triebdrehgestellen,
- FIG 3: einen vierteiligen Triebzug mit vier Triebdrehgestellen,
- FIG 4: einen vierteiligen Mehrsystem-Triebzug mit drei Triebdrehgestellen, und
- FIG 5: einen vierteiligen Triebzug mit drei Triebdrehgestellen und zwei Traktionsbatterien.

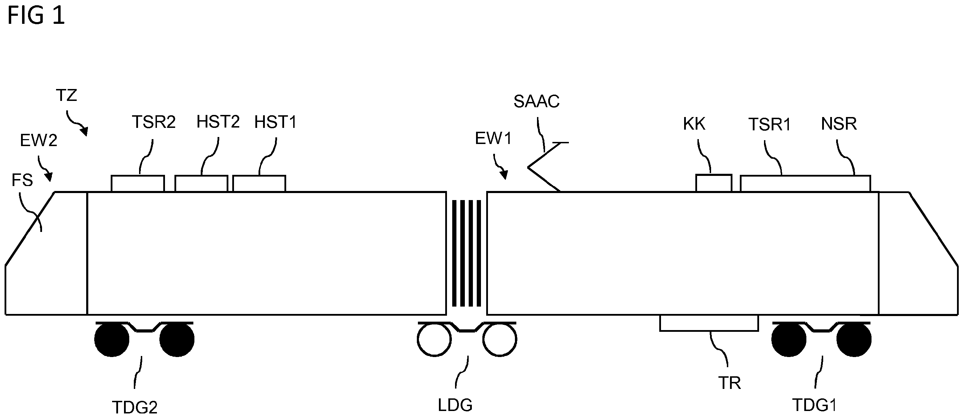

FIG 1 zeigt eine schematische Seitenansicht einer Grundkonfiguration des erfindungsgemäßen Schienenfahrzeugs mit zwei miteinander gekoppelten Endwagen EW1, EW2. Das beispielhafte Schienenfahrzeug ist als ein Triebzug TZ für den Fahrgasttransport ausgestaltet, wobei in jedem der beiden Endwagen EW1, EW2 ein nicht speziell dargestellter Fahrgastraum sowie ein Führerstand FS vorgesehen ist. Der Triebzug TZ stützt sich über gesamt drei Drehgestellen auf nicht dargestellten Schienen eines Schienennetzes ab, wobei das mittlere Drehgestell als ein Jakobs-Drehgestell ausgestaltet ist. Die Grundkonfiguration des Triebzugs TZ umfasst traktionsseitig zwei Triebdrehgestelle TDG1, TDG2 als Enddrehgestelle, während das mittlere Drehgestell als ein antriebsloses Laufdrehgestell LDG ausgeführt ist.

An dem ersten Endwagen EW1 bzw. auf dessen Dach ist ein Stromabnehmer SAAC angeordnet, mittels welchem eine elektrische Verbindung mit einer eine Hochspannungs-Wechselspannung von beispielsweise 15kV oder 25kV führenden Oberleitung herstellbar ist, wobei die Oberleitung ebenfalls nicht in FIG 1 dargestellt ist. Im Unterflurbereich des ersten Endwagens EW1 ist in einem Gehäuse ein Transformator TR angeordnet, welcher mit dem Stromabnehmer SAAC elektrisch verbunden ist und über diesen mit Wechselstrom von der Oberleitung versorgt wird. Der Transformator TR ist aufgrund seines hohen Gewichts vorzugsweise im Unterflurbereich und näher an dem Enddrehgestell TDG1 angeordnet, um einerseits den Schwerpunkt des Endwagens niedrig zu halten, andererseits um die Achslast des mittleren Drehgestells LDG zu begrenzen.

Der Transformator TR speist einen Netzstromrichter NSR, welcher beispielsweise als ein Vierquadrantensteller ausgestaltet ist. Der Netzstromrichter NSR speist über einen ersten Gleichspannungs-Zwischenkreis einen ersten Traktionsstromrichter TSR1, welcher wiederum zwei Traktionsmotoren in dem ersten Triebdrehgestell TDG1 speist. Der Netzstromrichter NSR und der erste Traktionsstromrichter TSR1 sind vorzugsweise in einem gemeinsamen Gehäuse auf dem Dach des ersten Endwagens EW1 angeordnet, wodurch aufgrund des kompakten Gleichspannungs-Zwischenkreises für den ersten Traktionsstromrichter TSR1 insbesondere von der Anordnung einer Induktivität in diesem Zwischenkreis abgesehen werden kann. Der Transformator TR und der Netzstromrichter NSR werden über eine gemeinsame flüssigkeitsbasierte Kühlanlage KK gekühlt, welche in einem gesonderten Gehäuse ebenfalls auf dem Dach des ersten Endwagens EW angeordnet ist. Wie in FIG 1 beispielhaft dargestellt, sind die Gehäuse des Netzstromrichters NSR und des ersten Traktionsstromrichters TSR1 sowie der Kühlanlage KK vorzugsweise jeweils im vorderen bzw. mittigen Bereich des ersten Endwagens EW1 bzw. im Bereich des Enddrehgestells TDG1 angeordnet, wiederum um die Achslast des mittleren Drehgestells LDG zu begrenzen.

Ein zweiter Traktionsstromrichter TSR2, welcher vorzugsweise identisch dem ersten Traktionsstromrichter TSR1 ausgestaltet ist, wird von dem Netzstromrichter NSR über einen zweiten Gleichspannungs-Zwischenkreis gespeist. Dieser zweite Traktionsstromrichter TSR2 ist vorzugsweise im Bereich des Enddrehgestells des zweiten Endwagens EW2 bzw. des zweiten Triebdrehgestells TDG2 angeordnet, dessen zwei Traktionsmotoren von dem zweiten Traktionsstromrichter TSR2 gespeist werden. Der zweite Traktionsstromrichter TSR2 bzw. dessen Gehäuse ist beispielsweise auf dem Dach des zweiten Endwagens EW2 angeordnet. Beispielhaft sind auf dem Dach des zweiten Endwagens EW2 weiterhin zwei Hilfsbetriebestromrichter HST1, HST2 bzw. deren Gehäuse angeordnet, wobei ein erster Hilfsbetriebestromrichter HST1 aus dem ersten Gleichspannungs-Zwischenkreis gespeist wird, während der zweite Hilfsbetriebestromrichter HST2 aus dem zweiten Gleichspannungs-Zwischenkreis gespeist wird.

Ergänzend zu den in FIG 1 dargestellten Komponenten bzw. Gehäusen dieser Komponenten sind üblicherweise weitere elektrische Komponenten wie beispielsweise Klimatisierungseinrichtungen für eine jeweilige Klimatisierung des Fahrgastraums eines Wagens auf dem Dach oder im Unterflurbereich angeordnet.

Der in FIG 1 dargestellte Triebzug TZ kann für eine Erhöhung der Fahrgastkapazität durch einen Mittelwagen ergänzt werden. In dieser Konfiguration stützt sich der Triebzug TZ auf gesamt vier Drehgestellen ab, wobei die beiden mittleren Drehgestelle als nicht angetriebene Jakobs-Drehgestelle ausgeführt sind.

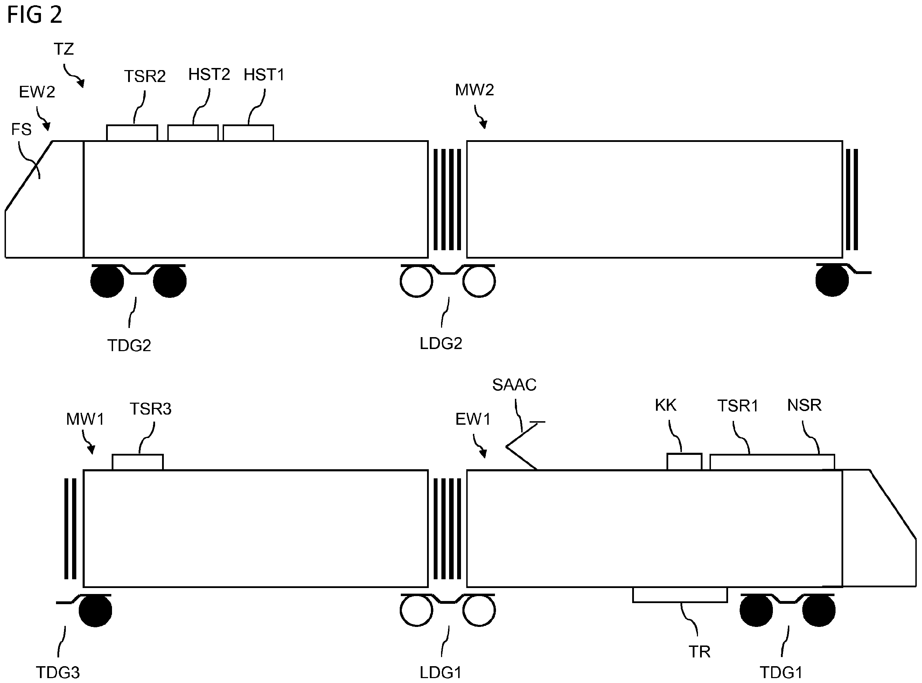

FIG 2 zeigt eine nicht erfindungsgemäße weitere Konfiguration des Triebzugs TZ basierend auf der zu FIG 1 beschriebenen Grundkonfiguration mit zwei Endwagen EW1, EW2, welche um zwei Mittelwagen MW1, MW2 ergänzt ist. In dieser Konfiguration stützt sich der Triebzug TZ auf gesamt fünf Drehgestellen ab. Das zwischen den beiden Mittelwagen MW1, MW2 angeordnete Jakobs-Drehgestell ist ergänzend als ein drittes Triebdrehgestell TDG3 ausgeführt, während die beiden weiteren Jakobs-Drehgestelle zwischen den Mittelwagen und einem jeweiligen Endwagen als Laufdrehgestelle ausgeführt sind. Alternativ zu dem Beispiel der FIG 2 kann in gleicher Weise auch eines der Laufdrehgestelle LDG1, LDG2 als ein Triebdrehgestell und das Triebdrehgestell TDG3 zwischen den Mittelwagen MW1, MW2 entsprechend als ein Laufdrehgestell ausgeführt sein.

Die beiden Traktionsmotoren des dritten Triebdrehgestells TDG3 werden von einem dritten Traktionsstromrichter TSR3 gespeist, der bzw. dessen Gehäuse auf dem Dach des ersten Mittelwagens MW1 und vorzugsweise im Bereich des gespeisten Triebdrehgestells angeordnet, um die Leitungslängen zwischen dem Traktionsstromrichter und den Traktionsmotoren zu begrenzen. Alternativ kann der dritte Traktionsstromrichter TSR3 in gleicher Weise auf dem Dach des zweiten Mittelwagens MW2 angeordnet sein. Der dritte Traktionsstromrichter TSR3 wird beispielsweise über die beiden Gleichspannungs-Zwischenkreise von dem Netzstromrichter NSR in dem ersten Endwagen EW1 gespeist. Um im Falle eines Ausfalls eines der Gleichspannungs-Zwischenkreise oder eines der Traktionsstromrichter TSR1, TSR2 in den Endwagen EW1, EW2 weiterhin eine geforderte Traktionsleistung von mindestens fünfzig Prozent zu gewährleisten, kann mittels geeigneter Schalter, welche vorzugsweise in dem gemeinsamen Gehäuse des Netzstromrichters NSR und ersten Traktionsstromrichters TSR1 angeordnet sind, der dritte Traktionsstromrichter TSR3 auch nur mit einem der Gleichspannungs-Zwischenkreise verbunden werden. Andererseits kann bei einem Ausfall des dritten Traktionsstromrichters TSR3 durch entsprechendes Schalten der Schalter der Netzstromrichter NSR über die Gleichspannungs-Zwischenkreise mit den beiden Traktionsstromrichtern TSR1, TSR2 in den Endwagen EW1, EW2 verbunden bleiben und so eine mindestens fünfzigprozentige Traktionsleistung des Triebzugs gewährleistet werden.

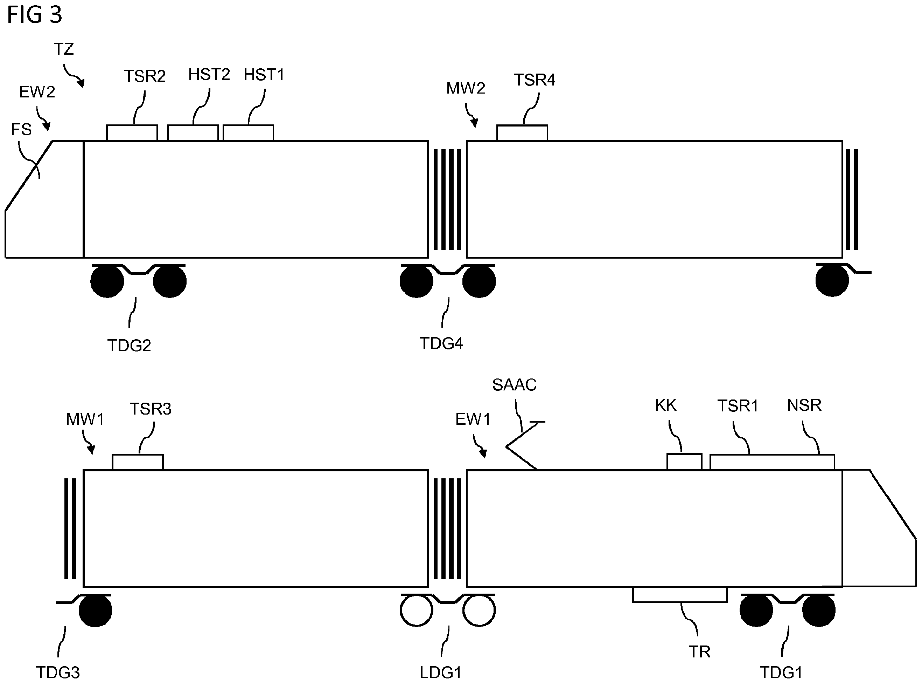

FIG 3 zeigt eine erfindungsgemäße Konfiguration des Triebzugs basierend auf der Konfiguration der FIG 2 als vierteiliger Triebzug mit zwei Endwagen EW1, EW2 sowie zwei Mittelwagen MW1, MW2. Für eine Erhöhung der Traktionsleistung ist das Laufdrehgestell LDG2 der FIG 2, auf dem sich der zweite Endwagen EW2 und der zweite Mittelwagen MW2 abstützen, durch ein viertes Triebdrehgestell TDG4 ersetzt worden. Die Traktionsmotoren des vierten Triebdrehgestells TDG4 werden von einem vierten Traktionsstromrichter TSR4 gespeist, welcher bzw. dessen Gehäuse auf dem Dach des zweiten Mittelwagens, nahe dem vierten Triebdrehgestell TDG4 angeordnet. Beispielsweise werden der erste TSR1 und der dritte Traktionsstromrichter TSR3 über den ersten Gleichspannungs-Zwischenkreis und der zweite TSR2 und der vierte Traktionsstromrichter TSR4 über den zweiten Gleichspannungs-Zwischenkreis von dem Netzstromrichter NSR gespeist. Hierdurch sind bei einer beispielhaften Störung in einem der beiden Zwischenkreise weiterhin fünfzig Prozent der Traktionsleistung über den anderen Zwischenkreis verfügbar.

Alternativ zu der Konfiguration der FIG 3 kann in gleicher Weise das erste Laufdrehgestell LDG1 der FIG 2 durch ein viertes Triebdrehgestell ersetzt werden. In diesem Fall sollte jedoch vorzugsweise entweder der vierte Traktionsstromrichter TSR4 oder der Stromabnehmer SAAC auf dem Dach des ersten Mittelwagens MW1 angeordnet werden. Bei der ersten Alternative sollte der dritte Traktionsstromrichter TSR3 zudem auf dem Dach des zweiten Mittelwagens MW2 angeordnet werden, damit nur ein Traktionsstromrichter an jedem Wagen angeordnet ist.

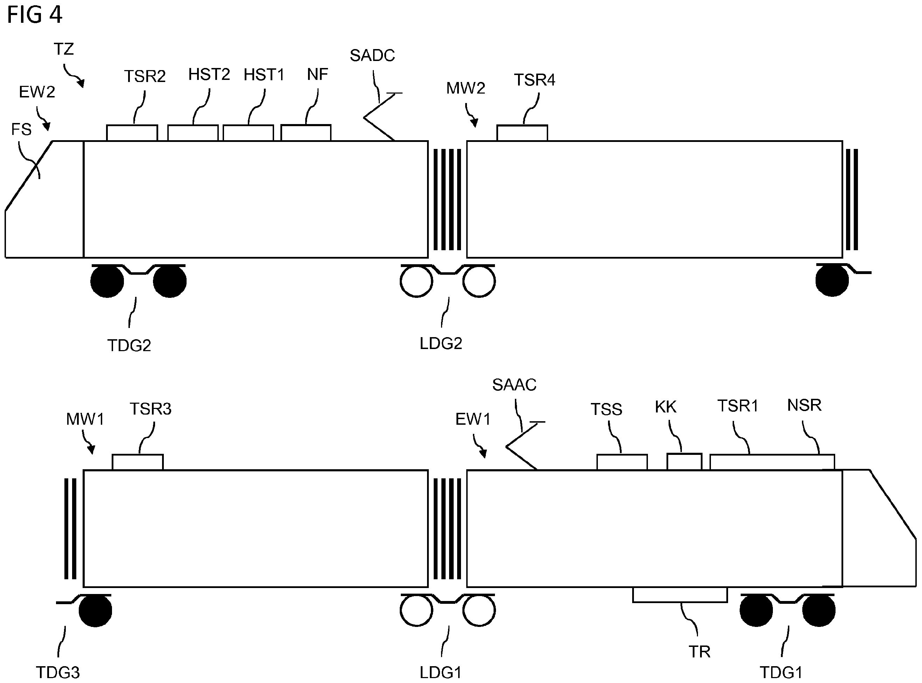

FIG 4 zeigt eine weitere Konfiguration des Triebzugs basierend auf der Konfiguration der FIG 2 als vierteiliger Triebzug mit zwei Endwagen EW1, EW2 sowie zwei Mittelwagen MW1, MW2. Ergänzend ist als ein so genannter Mehrsystem-Triebzug ausgestaltet, welcher sowohl von einer eine Wechselspannung führenden Oberleitung als auch von einer eine Gleichspannung führenden Oberleitung mit elektrischer Energie versorgt werden kann. Hierfür ist beispielhaft ein zweiter Stromabnehmer SADC auf dem Dach des zweiten Endwagens EW2 angeordnet, mittels welchem eine elektrische Verbindung mit einer eine Gleichspannung von beispielsweise 1,5kV oder 3kV führenden Oberleitung herstellbar ist.

Abhängig von der Hochspannung ist ergänzend zu einem gegebenenfalls erforderlichen Netzfilter ND, welcher bzw. dessen Gehäuse beispielhaft nahe dem zweiten Stromabnehmer SADC auf dem Dach des zweiten Endwagens EW2 angeordnet ist, ein Tiefsetzsteller TSS vorgesehen, welcher bzw. dessen Gehäuse beispielhaft auf dem Dach des ersten Endwagens EW1 angeordnet ist. Bei einer Versorgung mittels einer Gleichspannungs-Oberleitung dient der Netzstromrichter einer Umformung der Gleichspannung der Gleichspannungs-Oberleitung bzw. des Tiefsetzstellers in eine geregelte Gleichspannung der beiden Gleichspannungs-Zwischenkreise. Bei einem solchen Mehrsystem-Triebzug sind geeignete Schalter vorzusehen, mittels denen zwischen der Versorgung mit Gleichspannung und der Versorgung mit Wechselspannung umgeschaltet werden kann. Abhängig von der Versorgungsspannung erfolgt somit eine Speisung des Netzstromrichters NSR entweder mit einer Wechselspannung des Transformators oder mit einer Gleichspannung der Oberleitung bzw. des Tiefsetzstellers.

Die Ausführungsbeispiele der FIG 1 bis 3 zeigen jeweils eine Versorgung mittels einer Wechselspannungs-Oberleitung, bei der in dem Schienenfahrzeug ein Transformator TR vorgesehen ist. Alternativ kann das Schienenfahrzeug auch ausschließlich für eine Versorgung mittels einer Gleichspannungs-Oberleitung ausgestaltet sein, wobei in diesem Fall kein Transformator vorgesehen sein muss, sondern entsprechend der vorstehenden Ausführungen zu FIG 4 der Netzstromrichter direkt von der Gleichspannungs-Oberleitung oder einem Tiefsetzsteller gespeist wird.

Ferner sind ergänzend zu den Ausführungsbeispielen der FIG 1 bis 4 weitere Konfigurationen des Triebzugs denkbar. So können beispielsweise für eine Erhöhung der Fahrgastkapazität weitere Mittelwagen vorgesehen sein. Entsprechend können die bis zu zwei weiteren Triebdrehgestelle, welche die Triebdrehgestelle in den Endwagen ergänzen, flexibel an diesen weiteren Mittelwagen angeordnet werden.

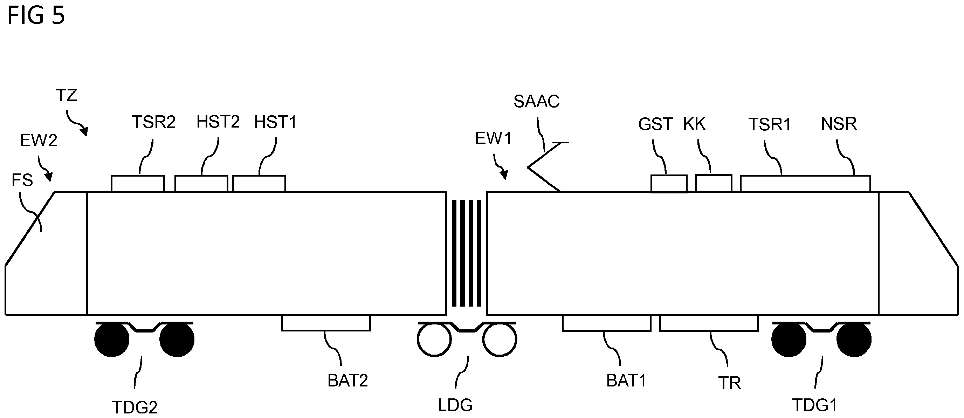

FIG 5 zeigt schließlich beispielhaft eine weitere Konfiguration des Triebzugs TZ basierend auf FIG 1, mit zwei direkt gekoppelten Endwagen EW1, EW2. Im Unterflurbereich der beiden Endwagen EW1, EW2 beispielhaft eine erste BAT1 und eine zweite Traktionsbatterie BAT2 bzw. deren jeweiliges Gehäuse angeordnet. Diese Traktionsbatterien BAT1, BAT2 speisen über einen beispielhaft auf dem Dach des ersten Endwagens EW1 angeordneten Gleichstromsteller (GST) einen oder beide Gleichspannungs-Zwischenkreise. Entsprechend können die Traktionsbatterien BAT1, BAT2 bei einer Versorgung mittels einer Oberleitung über den bzw. die Gleichspannungs-Zwischenkreise und den Gleichstromsteller geladen werden. Für eine Erhöhung der Kapazität und damit Reichweite des Triebzugs TZ unter Batteriebetrieb können weitere Traktionsbatterien in weiteren Mittelwagen angeordnet werden, um eine gleichmäßigere Verteilung der durch die zusätzlichen Batterien bedingten erhöhten Achslast über den Triebzug zu erzielen.

## Patentansprüche

1. Schienenfahrzeug (TZ), mit zumindest einem ersten und einem zweiten Endwagen (EW1, EW2) sowie einem elektrischen Traktionssystem,
zumindest aufweisend:
- einen Netzstromrichter (NSR), welcher über einen Stromabnehmer (SAAC, SADC) mit einer eine Gleich- und/oder Wechselspannung führenden Oberleitung verbindbar ist,
- einen ersten Traktionsstromrichter (TSR1), welcher angepasst ist, zumindest zwei Traktionsmotoren eines an dem ersten Endwagen angeordneten ersten Triebdrehgestells (TDG1) zu speisen,
- wobei der Netzstromrichter (NSR) und der erste Traktionsstromrichter (TSR1) an dem ersten Endwagen (EW1) und in einem gemeinsamen ersten Gehäuse angeordnet sind,
- einen zweiten Traktionsstromrichter (TSR2), welcher angepasst ist, zumindest zwei Traktionsmotoren eines an dem zweiten Endwagen angeordneten zweiten Triebdrehgestells (TDG2) zu speisen, wobei der zweite Traktionsstromrichter (TSR2) an dem zweiten Endwagen (EW2) und in einem zweiten Gehäuse angeordnet ist,
wobei
das elektrische Traktionssystem ferner aufweist:
- einen ersten und einen zweiten Gleichspannungs-Zwischenkreis, wobei der Netzstromrichter (NSR) angepasst ist, den ersten Traktionsstromrichter (TSR1) über den ersten Gleichspannungs-Zwischenkreis und den zweiten Traktionsstromrichter (TSR2) über den zweiten Gleichspannungs-Zwischenkreis zu speisen,
- wobei das erste und das zweite Triebdrehgestell (TDG1, TDG2) an einem von dem jeweils anderen Endwagen (EW2, EW1) abgewandten Ende des ersten bzw. zweiten Endwagens (EW1, EW2) angeordnet sind,
- zumindest zwei zwischen dem ersten und dem zweiten Endwagen angeordnete Mittelwagen (MW1, MW2), wobei sich die Mittelwagen (MW1, MW2) auf Trieb- und/oder Laufdrehgestellen (TDG, LDG) abstützen, und wobei sich zwei der Mittelwagen (MW1, MW2) auf einem jeweiligen weiteren Triebdrehgestell (TDG3, TDG4) abstützen,
- zwei weitere Traktionsstromrichter (TSR3, TSR4), welche angepasst sind, jeweils zumindest zwei Traktionsmotoren der weiteren Triebdrehgestelle (TDG3, TDG4) zu speisen und an dem jeweiligen Mittelwagen (MW1, MW2) oder an einem benachbarten weiteren Mittelwagen (MW1, MW2) und in einem jeweiligen fünften Gehäuse angeordnet sind, wobei an jedem Endwagen (EW1, EW2) und jedem Mittelwagen (MW1, MW2) höchstens ein Traktionsstromrichter (TSR1, TSR2, TSR3, TSR4) anordenbar ist,
**dadurch gekennzeichnet, dass**
- der Netzstromrichter (NSR) vier Teil-Netzstromrichter aufweist, wobei jeweils zwei Teil-Netzstromrichter angepasst sind, einen Gleichspannungs-Zwischenkreis zu speisen, und
- wobei der Netzstromrichter (NSR) angepasst ist, die weiteren Traktionsstromrichter (TSR3, TSR4) jeweils über einen der beiden Gleichspannungs-Zwischenkreise zu speisen, und wobei die Gleichspannungs-Zwischenkreise elektrisch voneinander getrennt sind.

2. Schienenfahrzeug (TZ) nach Anspruch 1, ferner aufweisend: einen Transformator (TR), welcher eingangsseitig über den Stromabnehmer (SAAC) mit einer eine Wechselspannung führenden Oberleitung verbindbar ist und angepasst ist, ausgangsseitig den Netzstromrichter (NSR) zu speisen, wobei der Transformator (TR) an dem ersten Endwagen (EW1) und in einem dritten Gehäuse angeordnet ist.

3. Schienenfahrzeug (TZ) nach Anspruch 2, ferner aufweisend: eine flüssigkeitsbasierte Kühlanlage (KK) zur gemeinsamen Kühlung des Transformators (TR) und des Netzstromrichters (NSR), wobei die Kühlanlage (KK) an dem ersten Endwagen (EW1) und in einem vierten Gehäuse angeordnet ist.

4. Schienenfahrzeug (TZ) nach einem der vorhergehenden Ansprüche, ferner aufweisend:
zumindest zwei Hilfsbetriebestromrichter (HST1, HST2), welche mit einem jeweiligen Gleichspannungs-Zwischenkreis verbunden sind.

5. Schienenfahrzeug (TZ) nach einem der vorhergehenden Ansprüche, ferner aufweisend:
zumindest eine Traktionsbatterie (BAT1, BAT2), welche über einen Gleichstromsteller (GST) mit einem der Gleichspannungs-Zwischenkreise verbunden ist und welche in einem sechsten Gehäuse und an einem Endwagen (EW1, EW2) angeordnet ist.

## Claims

1. Rail vehicle (TZ), with at least one first and one second end carriage (EW1, EW2) and an electrical traction system,
at least having:
- a line power converter (NSR), which can be connected to an overhead contact wire guiding a direct and/or alternating voltage by way of a current collector (SAAC, SADC),
- a first traction converter (TSR1), which is adjusted to feed at least two traction motors of a first motor bogie (TDG1) arranged on the first end carriage,
- wherein the line power converter (NSR) and the first traction converter (TSR1) are arranged on the first end carriage (EW1) and in a shared first housing,
- a second traction converter (TSR2), which is adjusted to feed at least two traction motors of a second motor bogie (TDG2) arranged on the second end carriage, wherein the second traction converter (TSR2) is arranged on the second end carriage (EW2) and in a second housing,
wherein
the electrical traction system further has:
- a first and a second direct voltage intermediate circuit, wherein the line power converter (NSR) is adjusted to feed the first traction converter (TSR1) by way of the first direct voltage intermediate circuit and the second traction converter (TSR2) by way of the second direct voltage intermediate circuit,
- wherein the first and the second motor bogie (TDG1, TDG2) are arranged on an end of the first and/or second end carriage (EW1, EW2) facing away from the respective other end carriage (EW2, EW1),
- at least two middle carriages (MW1, MW2) arranged between the first and the second end carriage, wherein the middle carriages (MW1, MW2) brace against motor and/or trailer bogies (TDG, LDG), and wherein two of the middle carriages (MW1, MW2) brace against a respective further motor bogie (TDG3, TDG4),
- two further traction converters (TSR3, TSR4), which are adjusted to feed in each case at least two traction motors of the further motor bogies (TDG3, TDG4) and are arranged on the respective middle carriage (MW1, MW2) or on an adjacent further middle carriage (MW1, MW2) and in a respective fifth housing, wherein at most one traction converter (TSR1, TSR2, TSR3, TSR4) can be arranged on each end carriage (EW1 ,EW2) and each middle carriage (MW1, MW2),
**characterised in that**
- the line power converter (NSR) has four sub line power converters, wherein in each case two sub line power converters are adjusted to feed a direct voltage intermediate circuit, and
- wherein the line power converter (NSR) is adjusted to feed the further traction converters (TSR3, TSR4) in each case by way of one of the two direct voltage intermediate circuits, and wherein the direct voltage intermediate circuits are separated electrically from one another.

2. Rail vehicle (TZ) according to claim 1, further having: a transformer (TR), which can be connected on the input side by way of the current collector (SAAC) to an overhead contact wire guiding an alternating voltage and is adjusted to feed the line power converter (NSR) on the output side, wherein the transformer (TR) is arranged on the first end carriage (EW1) and in a third housing.

3. Rail vehicle (TZ) according to claim 2, further having: a liquid-based cooling system (KK) for joint cooling of the transformer (TR) and the line power converter (NSR), wherein the cooling system (KK) is arranged on the first end carriage (EW1) and in a fourth housing.

4. Rail vehicle (TZ) according to one of the preceding claims, further having:
at least two auxiliaries converters (HST1, HST2), which are connected to a respective direct voltage intermediate circuit.

5. Rail vehicle (TZ) according to one of the preceding claims, further having:
at least one traction battery (BAT1, BAT2), which is connected to one of the direct voltage intermediate circuits by way of a direct inverter (GST) and which is arranged in a sixth housing and on an end carriage (EW1, EW2).

## Revendications

1. Véhicule (TZ) ferroviaire, comprenant au moins une première et une deuxième voiture (EW1, EW2) d'extrémité ainsi qu'un système de traction électrique,
comportant au moins :
- un convertisseur (NSR) de réseau, qui, par un appareil (SAAC, SADC) de prise de courant, peut être relié à une ligne de contact donnant une tension continue et/ou alternative,
- un premier convertisseur (TSR1) de traction, qui est conçu pour alimenter au moins deux moteurs de traction d'un premier bogie (TDG1) moteur monté sur la première voiture d'extrémité,
- dans lequel le convertisseur (NSR) de réseau et le premier convertisseur (TSR1) de traction sont disposés dans la première voiture (EW1) d'extrémité et dans un premier boîtier commun,
- un deuxième convertisseur (TSR2) de traction, qui est conçu pour alimenter au moins deux moteurs de traction d'un deuxième bogie (TDG2) moteur monté sur la deuxième voiture d'extrémité, dans lequel le deuxième convertisseur (TSR2) de traction est disposé sur la deuxième voiture (EW2) d'extrémité et dans un deuxième boîtier,
dans lequel
le système de traction électrique comporte en outre :
- un premier et un deuxième circuits intermédiaires de tension continue, dans lequel le convertisseur (NSR) de réseau est conçu pour alimenter le premier convertisseur (TSR1) de traction par l'intermédiaire du premier circuit intermédiaire de tension continue et le deuxième convertisseur (TSR2) de traction par l'intermédiaire du deuxième circuit intermédiaire de tension continue,
- dans lequel le premier et le deuxième bogies (TDG1, TDG2) moteurs sont montés à une extrémité, loin de l'autre voiture (EW2, EW1) d'extrémité respective, de la première et respectivement de la deuxième voiture (EW1, EW2) d'extrémité,
- au moins deux voitures (MW1, MW2) intermédiaires disposées entre la première et la deuxième voiture d'extrémité, dans lequel les voitures (MW1, MW2) intermédiaires s'appuient sur des bogies (TDG, LDG) moteur et/ou porteur et, dans lequel deux des voitures (MW1, MW2) intermédiaires s'appuient sur un autre bogie (TDG3, TDG4) moteur respectif,
- deux autres convertisseurs (TSR3, TSR4) de traction, qui sont conçus pour alimenter chacun au moins deux moteurs de traction des autres bogies (TDG3, TDG4) moteurs et qui sont montés sur la voiture (MW1, MW2) intermédiaire respective ou sur une autre voiture (MW1, MW2) intermédiaire voisine et qui sont disposés dans un cinquième boîtier respectif, dans lequel sur chaque voiture (EW1, EW2) d'extrémité et sur chaque voiture (MW1, MW2) intermédiaire peut être monté au plus un convertisseur (TSR1, TSR2, TSR3, TSR4) de traction,
**caractérisé en ce que**
- le convertisseur (NSR) de réseau a quatre convertisseurs partiels de réseau, dans lequel respectivement deux convertisseurs partiels de réseau sont conçus pour alimenter un circuit intermédiaire de tension continue, et
- dans lequel le convertisseur (NSR) de réseau est conçu pour alimenter les autres convertisseurs (TSR3, TSR4) de traction respectivement par l'un des deux circuits intermédiaires de tension continue et dans lequel les circuits intermédiaires de tension continue sont séparés électriquement l'un de l'autre.

2. Véhicule (TZ) ferroviaire suivant la revendication 1, comportant en outre :
un transformateur (TR), qui peut être relié du côté de l'entrée par l'appareil (SAAC) de prise de courant, à une ligne de contact donnant une tension alternative et est adapté pour alimenter du côté de la sortie le convertisseur (NSR) de réseau, dans lequel le transformateur (TR) est disposé dans la première voiture (EW1) d'extrémité et dans un troisième boîtier.

3. Véhicule (TZ) ferroviaire suivant la revendication 2, comportant en outre :
une installation (KK) de refroidissement à base de liquide pour le refroidissement commun du transformateur (TR) et du convertisseur (NSR) de réseau, dans lequel l'installation (KK) de refroidissement est disposée sur la première voiture (EW1) d'extrémité et dans un quatrième boîtier.

4. Véhicule (TZ) ferroviaire suivant l'une des revendications précédentes, comportant en outre :
au moins deux convertisseurs (HST1, HST2) de service auxiliaires, qui sont reliés à un circuit intermédiaire respectif de tension continue.

5. Véhicule (TZ) ferroviaire suivant l'une des revendications précédentes, comportant en outre :
au moins une batterie (BAT1, BAT2) de traction, qui est reliée à l'un des circuits intermédiaires de tension continue par un régleur (GST) de courant continu et qui est disposée dans un sixième boîtier et sur une voiture (EW1, EW2) d'extrémité.
